# EUROPEAN PATENT SPECIFICATION

(11) **EP 3 309 863 B1**
(45) Date of publication and mention of the grant of the patent: **16.03.2022**
(21) Application number: 17196150.1
(22) Date of filing: 12.10.2017
(51) Int. Cl.: H01M 50/213, H02J 7/00, G01D 4/00

(54) **WIRELESS DEVICE**
DRAHTLOSE VORRICHTUNG
DISPOSITIF SANS FIL

(30) Priority: 13.10.2016 JP 2016201718
(43) Date of publication of application: 18.04.2018
(73) Proprietor: Panasonic Intellectual Property Management Co., Ltd., Osaka-shi, Osaka 540-6207 (JP)
(72) Inventor: WATANABE, Takashi, Osaka, 540-6207 (JP); TERAMOTO, Shota, Osaka, 540-6207 (JP); MIZUTANI, Atsushi, Osaka, 540-6207 (JP)
(74) Representative: SSM Sandmair

(56) References cited:
- EP-A1- 2 833 476
- EP-A2- 0 949 698
- JP-A- 2014 064 050
- US-A1- 2002 043 956

## Description

### 1. Technical Field

The present disclosure relates to a wireless device powered by a battery.

### 2. Description of the Related Art

A wireless automatic meter reading device, which automatically and wirelessly reads meters to check the amount of usage of utilities such as gas, electricity, and water, is in practical use.

As disclosed in Unexamined Japanese Patent Publication No. 2012-134604, for example, such a wireless automatic meter reading device includes: a slave unit that is installed on a meter to receive meter-reading values from the meter; a master unit that sends the meter-reading values obtained from the slave unit to a center server at a utility company; and another slave unit (a repeater) that relays data between the slave unit and the master unit if a large distance between the slave unit and the master unit prevents direct communication.

A wireless automatic meter reading device of this type has slave units, repeaters, and a master unit that are connected to form a multistage communication path in relation to a range of the communication path such that meter-reading values are ultimately collected into the master unit.

A wireless device of this type is powered by a built-in battery and is designed to operate for a predetermined period (e.g., 10 years in the case of a gas meter slave unit) without replacement of the battery. The slave unit, the repeater, and the master unit communicate with respective different numbers of devices, and thus have different communication times and consume different amounts of electric currents. If these units are powered by batteries, batteries that suit the respective consumed electric currents are selected to be incorporated.

JP 2014 064050 A discloses a portable wireless apparatus comprising all features of the preamble of claim 1. In particular, the apparatus can be attached to one among several kinds of battery packs differing in overall depth from each other and therefore in capacity as well.

US 2002/043956 A1 discloses a battery storage case which can hold either a first pair of cylindrical AA batteries or a second pair of cylindrical lithium battery cells. EP 2 833 476 A1 discloses a flow meter device comprising: a housing which is formed of an electrically-conductive material and accommodates therein a sensor for detecting a flow of a target; a radiation conductor which radiates an electric wave of a radio frequency signal; a circuit board which is electrically connected to the radiation conductor and in which a power supplying circuit for supplying radio-frequency electric power of the radio frequency signal to the radiation conductor is mounted; a casing which is formed of a non-electrically-conductive material, is placed on the housing, and accommodates therein the radiation conductor and the circuit board; and a connecting member which is formed of the electrically-conductive material and electrically connects the housing and a ground of the power supplying circuit to each other.

EP 0 949 698 A2 discloses plural kinds of battery packs having an optional number of battery cells a battery charger capable of charging the battery packs and an electronic equipment capable of using the battery packs. In a battery pack having the optional number of cells built therein, a terminal is provided in the same position as a terminal position in one cell pack. A charger and an electronic equipment using a pack have a pack fixing plane capable of fixing a pack having at least two cells built in parallel, and comprise engaging means for engaging at least one cell pack with the battery pack fixing plane and connecting means connected to positive electrode and negative electrode terminals of the one cell pack and disposed at such a position that charging or discharging can be performed.

### SUMMARY

However, the conventional method requires the slave unit, the repeater, and the master unit to incorporate different sized batteries, respectively, and involves designing casings for the slave unit, the repeater, and the master unit to fit the respective battery sizes. As a result, commonality of the casings is not implemented.

In order to solve this problem, the present invention is directed to the wireless device of claim 1.

A wireless device provided by the present disclosure has a battery storage room to store and fasten different batteries while using a casing in common, even if any one of the batteries having varying capacities is selected to correspond to power consumption depending on a built-in function of the wireless device. Said wireless device includes a wireless circuit unit and a battery storage room that is configured to store a battery pack for supplying electric power to the wireless circuit unit. Both the wireless circuit unit and the battery storage room are disposed inside a casing. The battery storage room includes a holder configured to hold any one of a plurality of the battery packs having different sizes.

Consequently, said wireless device can store and fasten different sized batteries while using the casing in common. This configuration allows the wireless device to select and incorporate any one of batteries having suitable capacities, i.e., the different sized batteries, in response to a built-in function of the wireless circuit unit (e.g., a concentrator, a repeater, a slave meter, or a master meter).

Further, the wireless device can select and incorporate a battery suited to power consumption even if the power consumption varies depending on a communication specification, like a wireless device having a function of wired connection with a meter.

### BRIEF DESCRIPTION OF THE DRAWINGS

FIG. 1 is an exterior perspective view illustrating a wireless device;
FIG. 2A is a perspective view illustrating the wireless device without a battery lid;
FIG. 2B is a plan view illustrating the wireless device without the battery lid;
FIG. 3 is a perspective view illustrating a battery pack stored in a battery storage room in the wireless device;
FIG. 4A is a cross-sectional view illustrating a storage state of the battery pack in the battery storage room of the wireless device;
FIG. 4B is a cross-sectional view illustrating another storage state of the battery pack in the battery storage room of the wireless device;
FIG. 4C is a cross-sectional view illustrating another storage state of the battery pack in the battery storage room of the wireless device.

### DETAILED DESCRIPTION

A wireless device will be described below.

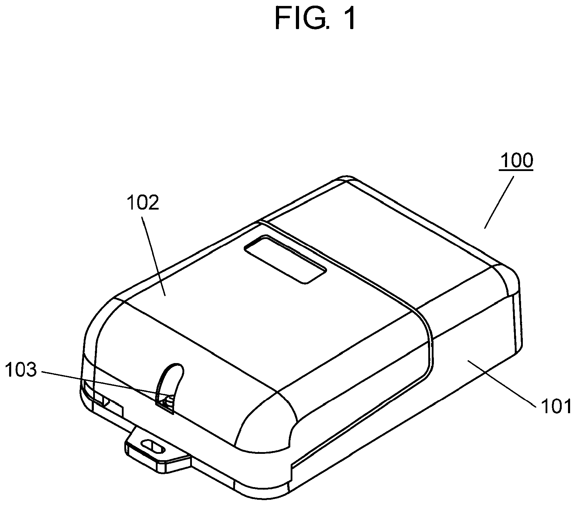

FIG. 1 is an exterior perspective view of wireless device 100 and illustrates an outer casing for wireless device 100. The casing of wireless device 100 includes casing body 101 and battery lid 102 fastened to casing body 101 with screw 103.

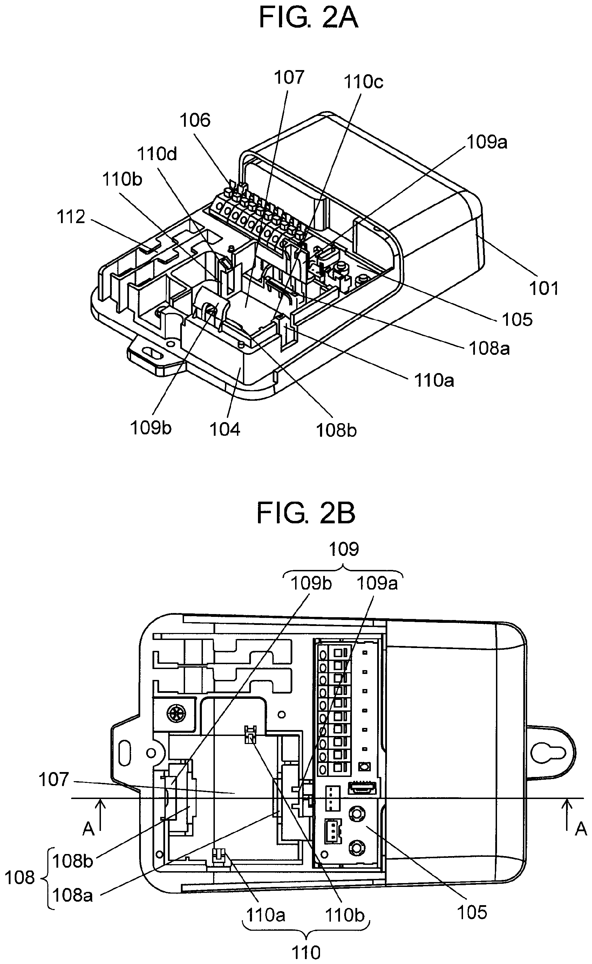

FIG. 2A is a perspective view illustrating wireless device 100 without battery lid 102. Battery case 104 and wireless circuit unit 105 are provided inside casing body 101. Battery case 104 includes battery storage room 107 for storing and fastening a battery acting as a power supply, and wireless circuit unit 105 includes a wireless circuit board. FIG. 2B is a plan view illustrating wireless device 100 without battery lid 102.

Wireless device 100 performs a function by wireless circuit unit 105. A slave unit, a repeater, and a master unit may share the use of a basic circuit and may each select a function by setting or select possession of an additional component to have a purpose-built circuit board. Alternatively, a slave unit, a repeater, and a master unit may have specifically designed circuit boards, respectively.

Wireless circuit unit 105 made up of the wireless circuit board incorporates terminal block 106. If wireless circuit unit 105 functions as a slave unit, terminal block 106 is used to connect with a meter, a level gage, an alarm, and a switching valve via leads. Lead holder 112 is provided with alternate protrusions 112a formed from side to side, and is configured to hold the leads (not shown) connected to the meter.

An amount of electric current consumed by wireless circuit unit 105 differs depending on the function and installation conditions. Thus, a battery pack is selected to suit the consumption amount. Herein the battery pack is to be selected from battery packs that combine two, three, and five cylindrical batteries respectively. Battery storage room 107 allows storage of any one of the battery packs.

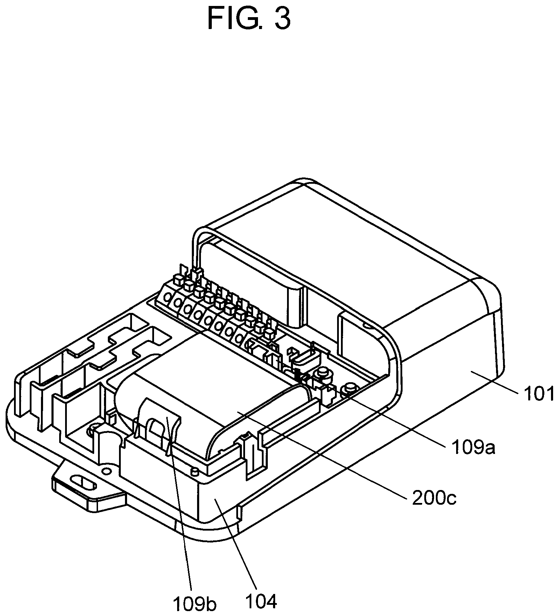

FIG. 3 is a perspective view illustrating battery pack 200c stored in battery storage room 107. Battery pack 200c to be described later combines five batteries together, for example.

Next, a configuration of battery storage room 107 and a method for storing plural kinds of battery packs will be described with reference to FIGS. 2A to 4C.

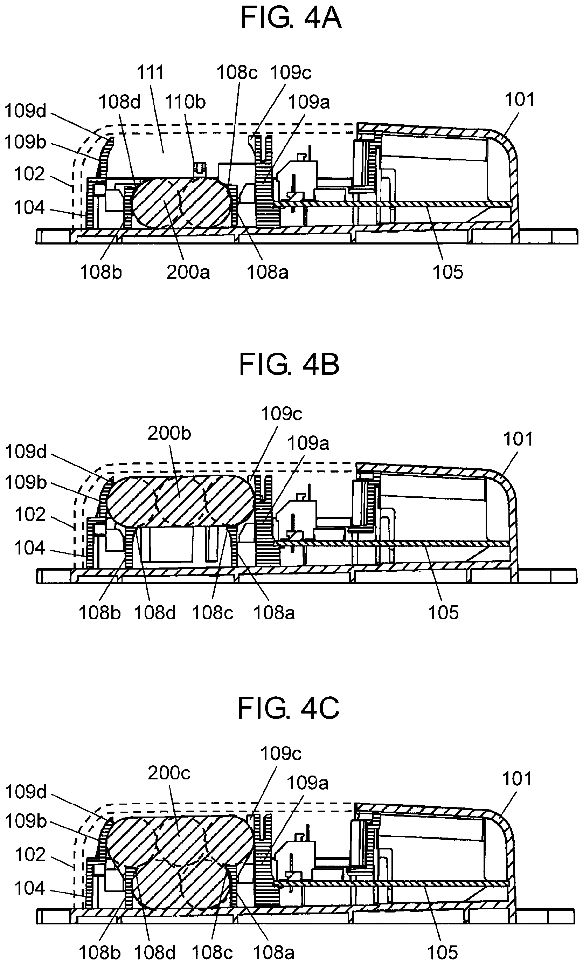

FIGS. 4A to 4C are cross-sectional views illustrating different sized battery packs stored respectively in the wireless device, taken from line 4-4 in FIG. 2B.

These battery packs are battery pack 200a that combines two basic cylindrical batteries together, battery pack 200b that combines three side-by-side disposed batteries together, and battery pack 200c that combines five cylindrical batteries in which the three batteries disposed in one plane are stacked with the other two batteries. Cross-sectional shapes of the battery packs are as shown in FIGS. 4A to 4C. In FIGS. 4A to 4C, the basic cylindrical batteries in battery packs 200a, 200b, 200c are shown by dashed-line circles.

Battery storage room 107 is provided with three holders to hold a stored battery pack. With reference to FIG. 2B, first holder 108 includes hook 108a and hook 108b. Second holder 109 includes hook 109a and hook 109b. Third holder 110 includes hook 110a and hook 110b.

With reference to FIGS. 4A to 4C, bends 108c, 108d facing toward an inside of battery storage room 107 are formed on respective ends of hook 108a and hook 108b. Protrusions 109c, 109d facing toward the inside of battery storage room 107 are formed on respective ends of hook 109a and hook 109b. With reference to FIG. 2A, protrusions 110c, 110d facing toward the inside of battery storage room 107 are formed on hook 110a and hook 110b.

FIG. 4A illustrates stored battery pack 200a combining two basic cylindrical batteries together. First holder 108 holds sides (lateral ends in the drawing) of battery pack 200a. An upper part of battery pack 200a is held by protrusions 110c, 110d of hook 110a and hook 110b that constitute third holder 110. This configuration fastens battery pack 200a inside battery storage room 107.

When battery lid 102 shown by a dotted line is put on the wireless device, space 111 exists. Because battery pack 200a is held by first holder 108 and third holder 110, battery pack 200a can be reliably fastened inside battery storage room 107.

FIG. 4B illustrates stored battery pack 200b combining three cylindrical batteries disposed side-by-side. Battery pack 200b is placed on an upper part of first holder 108. Second holder 109 holds sides (lateral ends in the drawing) of battery pack 200b. Third holder 110 holds battery pack 200b in a front-back direction (a vertical direction in FIG. 2B).

As shown in FIG. 4B, motion of battery pack 200b is restricted laterally by second holder 109, downwardly by first holder 108, and upwardly by battery lid 102 shown by a dotted line. Thus, battery pack 200b does not rattle inside battery storage room 107.

FIG. 4C illustrates stored battery pack 200c combining five cylindrical batteries together. First holder 108 and second holder 109 hold sides (lateral ends in the drawing) of battery pack 200c. Third holder 110 holds battery pack 200c in the front-back direction (the vertical direction in FIG. 2B).

As shown in FIG. 4C, motion of battery pack 200c is restricted laterally by first holder 108 and second holder 109, and upwardly by battery lid 102 shown by a dotted line. Thus, battery pack 200c does not rattle inside battery storage room 107.

First holder 108 functions as a fastener for holding the sides of battery pack 200a to hold battery pack 200a, and functions as a stand for positioning to store battery pack 200b. As a result, first holder 108 has two functions.

Third holder 110 has a function of preventing battery pack 200a from coming off to hold battery pack 200a, and has a function of holding battery pack 200b, 200c in the vertical direction of FIG. 2B through use of resilience

As described above, any battery pack 200a, 200b, 200c can be stored and held in battery storage room 107, and thus prevented from being disengaged and falling from battery storage room 107.

Consequently, the wireless device can store and fasten different sized batteries while using a casing in common. This configuration allows the wireless device to select a battery having a suitable capacity in response to a built-in function of the wireless device (e.g., a concentrator, a repeater, a slave meter, or a master meter).

Further, this configuration allows the wireless device to select and incorporate a battery suited to power consumption even if the power consumption varies depending on a communication specification, like a wireless device having a function of wired connection with a meter.

In the exemplary embodiment, a wireless device has been described with battery packs combining cylindrical batteries together.

As described above, a wireless device includes a wireless circuit unit and a battery storage room that is configured to store a battery pack for supplying electric power to the wireless circuit unit. Both the wireless circuit unit and the battery storage room are disposed inside a casing. The battery storage room includes a holder configured to hold any one of a plurality of the battery packs having different sizes.

The battery storage room may further include a holder having a pair of hooks configured to perform fastening or positioning of any one of a plurality of the battery packs having different sizes.

The holder may further have a different function of performing fastening or positioning of a battery in response to a size of the battery pack to be stored.

The battery pack is combination of a plurality of the batteries having identical cylindrical shapes together, and varies in size because of respective different numbers of the plurality of batteries.

The wireless circuit may be further configured to select a wireless function.

The wireless circuit unit may further incorporate a circuit board selected to be dedicated for a wireless function.

## Claims

1. A wireless device (100) comprising:
a wireless circuit unit (105); and
a battery storage room (107) configured to store a battery pack for supplying electric power to the wireless circuit unit (105),
wherein the battery storage room (107) includes a holder to hold battery packs (200a, 200b, 200c),
**characterized in that**
the wireless circuit unit further comprises a common casing (101), wherein both the wireless circuit unit (105) and the storage room (107) are disposed inside the common casing (101),
the battery storage room (107) is configured to store two, three or five cylindrical batteries of the same size,
wherein the holder includes:
a first holder (108) to hold a first battery pack (200a) that combines two of the cylindrical batteries together, and
a second holder (109) to hold a second battery pack (200b) that combines three of the cylindrical batteries disposed side-by-side together, the second battery pack (200b) being placed on an upper part of the first holder (108), and
the first holder (108) and the second holder (109) are configured to hold a third battery pack (200c) that combines five of the cylindrical batteries together in which three batteries disposed in one plane are stacked with the other two batteries.

2. The wireless device according to claim 1, wherein the holders each having at least a pair of hooks configured to perform fastening or positioning of any one of a plurality of the battery packs (200a, 200b, 200c) having different sizes.

3. The wireless device according to one of claims 1 or 2, wherein the holder has a different function of performing fastening or positioning of a battery in response to a size of the battery pack to be stored.

4. The wireless device according to any one of claims 1 to 3, wherein the battery pack is combination of a plurality of the batteries having identical cylindrical shapes together, and varies in size because of respective different numbers of the plurality of batteries.

5. The wireless device according to any one of claims 1 to 4, wherein the wireless circuit unit is configured to select a wireless function.

6. The wireless device according to any one of claims 1 to 4, wherein the wireless circuit unit incorporates a circuit board selected to be dedicated for a wireless function.

## Patentansprüche

1. Drahtlose Einrichtung (100), die aufweist:
eine drahtlose Schalteinrichtung (105); und
einen Batterielagerraum (107), der konfiguriert ist, um einen Akkupack zum Zuführen elektrischer Leistung zu der drahtlosen Schalteinrichtung (105) zu lagern,
wobei der Batterielagerraum (107) einen Halter enthält, um Akkupacks (200a, 200b, 200c) zu halten,
**dadurch gekennzeichnet, dass**
die drahtlose Schalteinrichtung ferner aufweist, ein gemeinsames Gehäuse (101), wobei sowohl die drahtlose Schalteinrichtung (105) als auch der Lagerraum (107) innerhalb des gemeinsamen Gehäuses (101) untergebracht sind,
der Batterielagerraum (107) konfiguriert ist, um zwei, drei oder fünf zylindrische Akkus von der gleichen Größe zu lagern,
wobei der Halter enthält,
einen ersten Halter (108), um ein erstes Akkupack (200a) zu halten, das zwei von den zylindrischen Batterien miteinander kombiniert und
einen zweiten Halter (109), um ein zweites Akkupack (200b) zu halten, das drei von den zylindrischen Batterien kombiniert, die Seite an Seite zusammen angeordnet sind, wobei das zweite Akkupack (200b) auf einem oberen Teil von dem ersten Halter (108) platziert ist, und
der erster Halter (108) und der zweite Halter (109) sind konfiguriert, um ein drittes Akkupack (200c) zu halten, dass fünf von den zylindrischen Batterien miteinander kombiniert, in welchem drei Batterien, die in einer Ebene angeordnet sind, mit den anderen zwei Batterien gestapelt sind.

2. Drahtlose Einrichtung nach Anspruch 1, wobei die Halter jeweils zumindest ein Paar von Haken haben, die konfiguriert sind um eine Befestigung oder Positionierung von einem beliebigen von mehreren von den Akkupacks (200a, 200b, 200c) durchzuführen, die verschiedene Größen haben.

3. Drahtlose Einrichtung gemäß einem der Ansprüche 1 oder 2, wobei der Halter eine verschiedene Funktion zum Durchführen einer Befestigung oder Positionierung von einer Batterie in Reaktion auf eine Größe von dem Akkupack, das zu lagern ist, hat.

4. Drahtlose Einrichtung gemäß irgendeinem der Ansprüche 1 bis 3, wobei das Akkupack eine Kombination von mehreren der Batterien ist, die zusammen identische zylindrische Formen haben, und in der Größe wegen jeweiligen verschiedenen Anzahlen von den mehreren Batterien variiert.

5. Drahtlose Einrichtung gemäß irgendeinem der Ansprüche 1 bis 4, wobei die drahtlose Schalteinrichtung konfiguriert ist, um eine drahtlose Funktion auszuwählen.

6. Drahtlose Einrichtung gemäß irgendeinem der Ansprüche 1 bis 4, wobei die drahtlose Schalteinrichtung eine Schaltplatine einbezieht, die ausgewählt ist, um einer drahtlosen Funktionen gewidmet zu sein.

## Revendications

1. Dispositif sans fil (100), comprenant :
une unité de circuit sans fil (105) ; et
un espace de stockage de batteries (107) configuré pour stocker un bloc de batteries pour effectuer l'alimentation en énergie électrique à l'unité de circuit sans fil (105),
dans lequel l'espace de stockage de batteries (107) inclut un élément de retenue pour retenir des blocs de batteries (200a, 200b, 200c),
**caractérisé en ce que**
l'unité de circuit sans fil comprend en outre un boîtier commun (101), dans lequel l'unité de circuit sans fil (105) et l'espace de stockage (107) sont tous les deux disposés à l'intérieur du boîtier commun (101),
l'espace de stockage de batteries (107) est configuré pour stocker deux, trois ou cinq batteries cylindriques de la même taille,
dans lequel l'élément de retenue inclut :
un premier élément de retenue (108) pour retenir un premier bloc de batteries (200a) qui combine ensemble deux des batteries cylindriques, et
un second élément de retenue (109) pour retenir un deuxième bloc de batteries (200b) qui combine ensemble trois des batteries cylindriques disposées côte-à-côte, le deuxième bloc de batteries (200b) étant placé sur une partie supérieure du premier élément de retenue (108), et
le premier élément de retenue (108) et le second élément de retenue (109) sont configurés pour retenir un troisième bloc de batteries (200c) qui combine ensemble cinq des batteries cylindriques, dans lesquelles trois batteries disposées dans un plan sont empilées avec les deux autres batteries.

2. Dispositif sans fil selon la revendication 1, dans lequel les éléments de retenue ont chacun au moins une paire de crochets configurés pour réaliser une fixation ou un positionnement d'un quelconque d'une pluralité des blocs de batteries (200a, 200b, 200c) ayant différentes tailles.

3. Dispositif sans fil selon l'une des revendications 1 ou 2, dans lequel l'élément de retenue a une différente fonction de la réalisation d'une fixation ou d'un positionnement d'une batterie en réponse à une taille du bloc de batteries destiné à être stocké.

4. Dispositif sans fil selon l'une quelconque des revendications 1 à 3, dans lequel le bloc de batteries est une combinaison ensemble d'une pluralité des batteries ayant des formes cylindriques identiques, et varie en taille en raison de différents nombres respectifs de la pluralité de batteries.

5. Dispositif sans fil selon l'une quelconque des revendications 1 à 4, dans lequel l'unité de circuit sans fil est configurée pour sélectionner une fonction sans fil.

6. Dispositif sans fil selon l'une quelconque des revendications 1 à 4, dans lequel l'unité de circuit sans fil incorpore une carte de circuit imprimé sélectionnée pour être réservée à une fonction sans fil.
